# FASCICULE DE BREVET EUROPEEN

(11) **EP 0 571 307 B1**
(45) Date de publication et mention de la délivrance du brevet: **04.09.1996**
(21) Numéro de dépôt: 93460020.6
(22) Date de dépôt: 21.05.1993
(51) Int. Cl.: H02G 3/06

(54) **Tronçons de chemin de câbles auto-encastrables et procédé de fabrication de tels troncons**
Selbstverrastende Kabelrinnenteilstücke und Herstellungsverfahren
Self-assembly of cable duct pieces and method of manufacture

(30) Priorité: 22.05.1992 FR 9206461
(43) Date de publication de la demande: 24.11.1993
(73) Titulaire: Petit, Max, 14130 Pont l'Eveque (FR)
(72) Inventeur: Petit, Max, 14130 Pont l'Eveque (FR)
(74) Mandataire: Vidon, Patrice

(56) Documents cités:
- US-A- 3 042 351
- US-A- 3 161 722

## Description

La présente invention concerne la réalisation de structures en forme de gouttière permettant de supporter et de guider des câbles tels que, par exemple, des câbles électriques, des câbles téléphoniques, des câbles de fibres optiques, des câbles de réseau informatique ou toutes canalisations souples similaires. Ces structures sont désignées sous le terme de chemins de câbles et sont réalisées par l'assemblage de différents tronçons possédant une longueur et une largeur variables en fonction du nombre de câbles devant être disposés à l'intérieur de la gouttière qu'ils forment et de la longueur du chemin à parcourir.

Les tronçons constituant ces chemins de câbles sont classiquement constitués de structures en tôle perforée afin de les alléger ou par des treillis de fils d'acier mécano-soudés. Afin de résister à la corrosion, ces structures métalliques subissent généralement un traitement de surface de facture classique tel qu'un revêtement de peinture, un zingage ou une galvanisation à chaud. L'utilisation de l'acier inoxydable est parfois nécessaire pour combattre les atmosphères les plus agressives. Ces tronçons peuvent également être constitués de matériaux composites tels que le polyester armé.

Les tronçons de chemin de câbles réalisés à partir de fils, de chaînes et de trames organisés en treillis sont généralement formés par soudure à plat des fils entre eux. Cette soudure est réalisée dans des calibres possédant un dimensionnement variable en fonction de la taille du tronçon que l'on souhaite obtenir. Une fois cette opération de soudure effectuée, le treillis est déformé par pliage ou par cambrage, de façon à prendre la forme d'une gouttière.

Un chemin de câbles complet est réalisé par l'assemblage d'un nombre déterminé de ces tronçons, en fonction de la longueur du chemin à parcourir par les câbles.

Le principal problème posé par l'assemblage des tronçons de chemin de câbles de l'état de la technique est constitué par les différentes opérations et les différents systèmes utilisés pour pratiquer la jonction entre les différents tronçons. Une des plus anciennes méthodes utilisée pour assembler les tronçons de chemin de câbles entre eux consiste à utiliser des pièces rapportées se présentant sous la forme d'éclisses et à boulonner celles-ci entre deux tronçons de chemins de câbles consécutifs. La fixation des éclisses grâce à des boulons nécessite que celles-ci soient perforées de façon à pouvoir y introduire une vis, celle-ci étant ensuite bloquée par un écrou entre deux fils de trame d'extrémité par l'intermédiaire d'un cavalier. Cette solution ancienne présente divers inconvénients au rang desquels on compte la cherté en main d'oeuvre et en matériau.

On connaît également le document de brevet n° FR 2208219 qui concerne un dispositif d'assemblage de tronçons de chemins de câbles constitués par des treillis de fils soudés, caractérisé par le fait qu'il comporte latéralement au moins deux éclisses rigides dans leur partie centrale et élastiques dans leur partie d'extrémité, lesdites éclisses étant placées entre deux éléments longitudinaux de deux tronçons de chemin de câbles et étant maintenues en place grâce à leurs extrémités qui viennent chacune s'engager sur un fil transversal de chacun des deux tronçons de chemin de câble.

Ce dispositif présente l'inconvénient majeur de nécessiter un outil spécial pour la mise en place des éclisses élastiques en question. Cet outil, qui possède la faculté de tendre et de tirer en même temps les extrémités élastiques de l'éclisse afin que celle-ci vienne se bloquer sur certains fils des mailles du treillis constituant le tronçon de chemin de câbles, nécessite un débattement important pour être manoeuvré. Or, les chemins de câbles sont souvent disposés le long des murs selon un positionnement ne permettant pas un tel débattement. De plus, un autre inconvénient présenté par le dispositif d'assemblage de tronçons de chemin de câbles selon ce document de brevet français consiste dans le fait qu'une fois les éclisses placées entre les tronçons, il est très difficile de les en ôter. Ainsi, si le dispositif divulgué favorise l'assemblage des tronçons de chemin de câbles, il défavorise leur désassemblage et ainsi leur réutilisation.

En outre, les éclisses utilisées font intervenir plusieurs angles vifs qui contribuent à augmenter les risques de blessure à l'intérieur de la gouttière vis à vis des câbles qui y sont disposés et à l'extérieur de la gouttière vis à vis des ouvriers montant ces chemins de câbles ou des murs situés à proximité.

Par ailleurs, le dispositif d'assemblage décrit dans ce brevet n'est pas adapté pour être utilisé avec les tronçons de chemins de câbles constitués par des tôles perforées.

En ce qui concerne les chemins de câbles en tôle perforée, différents systèmes d'assemblage ont été envisagés. Ainsi, on connaît des dispositifs d'assemblage constitués par des plaques épousant les bords des gouttières formant le chemin de câbles et présentant des perforations aptes à rentrer en regard avec les perforations des tronçons. Ces pièces peuvent être disposées à la jonction entre les tronçons et solidarisées à ceux-ci grâce à des clips ou des vis permettant de plaquer fermement les pièces d'assemblage contre les tronçons. Cependant, à l'image des éclisses précédemment décrites, ces vis présentent l'inconvénient de nécessiter des outils particuliers pour être mises en place et les clips présentent l'inconvénient d'être difficiles à désolidariser des tronçons une fois qu'ils ont été placés sur ceux-ci. De plus, les clips ou les vis décrits dépassent largement à l'extérieur des tronçons, ce qui augmente de façon importante leur encombrement et constitue des sources d'arrachement potentielles vis-à-vis des différentes structures se trouvant à proximité des chemins de câbles.

L'objectif de la présente invention est de fournir un tronçon de chemin de câbles pouvant être relié à un autre tronçon identique sans l'intervention d'une pièce rapportée.

Un autre objectif de l'invention est de fournir un tel tronçon ne présentant pas les inconvénients des dispositifs d'assemblage de tronçons de chemins de câbles de l'état de la technique.

En particulier, l'invention a pour objectif de fournir un tel tronçon permettant de monter un chemin de câbles avec un gain de temps substantiel.

Un autre objectif de l'invention est également de faciliter le démontage de tels chemins de câbles.

Un autre objectif de l'invention est de fournir un tronçon de chemin de câbles dont l'assemblage permet de supprimer tout boulon ou accessoire ainsi que tout outil standard ou spécial nécessaire au montage de tels boulons ou accessoires.

Un autre objectif complémentaire de l'invention est également de fournir un tronçon de chemin de câbles présentant un aspect esthétique harmonieux.

Enfin, un autre objectif de l'invention est de proposer un tronçon de chemin de câbles présentant des caractéristiques facilitant le montage sur celui-ci de couvercles.

Ces différents objectifs ainsi que d'autres qui apparaîtront par la suite sont atteints grâce à un tronçon de chemin de câbles se présentant sous la forme d'une gouttière caractérisé en ce qu'il est constitué par un module asymétrique présentant deux extrémités complémentaires formant chacune un organe d'accouplement par encastrement réversible, un premier organe d'accouplement étant constitué par au moins une éclisse dont l'extrémité proximale est soudée à ladite gouttière et dont l'extrémité distale est munie d'un ergot d'accouplement, le second organe d'accouplement étant formé dans au moins une partie de ladite gouttière et étant susceptible d'accueillir ledit ergot d'accouplement.

En dépit des nombreux avantages qu'elle présente, la solution consistant à souder directement l'éclisse sur la structure formant la gouttière n'avait jusqu'alors jamais été utilisée, probablement en raison de l'existence d'un préjugé de l'homme du métier en faveur de systèmes à éclisses indépendantes. De plus, il n'avait jusqu'ici jamais été envisagé d'utiliser des structures de chemin de câbles en fils soudés présentant à la fois un organe mâle et un organe femelle permettant de joindre ces structures entre elles par encastrement.

Selon une première variante, ledit tronçon comprend au moins deux éclisses dont les extrémités proximales sont soudées aux parois latérales de ladite gouttière, symétriquement par rapport à l'axe longitudinal de celle-ci, de façon à se faire face.

Selon une autre variante, ledit tronçon comprend au moins deux éclisses, l'une desdites éclisses étant soudée à l'extrémité d'une des parois latérales de ladite gouttière et l'autre éclisse étant soudée à l'extrémité opposée de l'autre paroi latérale de ladite gouttière.

En effet, bien que l'on puisse envisager de n'utiliser qu'une seule éclisse, par exemple placée dans la zone centrale de la partie inférieure de la gouttière, l'utilisation de deux éclisses reliant les parois latérales de cette gouttière permet d'obtenir un assemblage davantage sécurisé des deux tronçons qu'elles relient. Pour des raisons de stockage, la première variante consistant à souder les éclisses sur les parois latérales de la gouttière de façon à se faire face est la solution préférée car elle permet de faciliter le stockage et le montage des tronçons de chemins de câbles.

Préférentiellement, ledit ergot d'accouplement est constitué par un doigt venant en saillie par rapport à la surface de ladite éclisse et formé par découpage ou par emboutissage dans celle-ci, le matériau constituant ladite éclisse présentant une élasticité suffisante pour permettre à l'ergot de venir s'encliqueter sur le second organe d'accouplement, lors de l'opération d'assemblage avec un autre tronçon de chemin de câbles.

Selon ce mode de réalisation, l'ergot de chaque éclisse peut venir s'encliqueter sur le second organe d'accouplement d'un autre tronçon de chemin de câbles et ainsi réaliser une liaison sécurisée entre les tronçons, mais peut aussi échapper à ce second organe d'accouplement qui le retient et faciliter par là le désaccouplé des deux tronçons de chemin de câbles ainsi reliés. Cet aspect réversible de l'assemblage constitue un avantage important de l'invention par rapport aux dispositifs existant de l'état actuel de la technique. En effet ces dispositifs existant nécessitent pour être démontés, du temps et parfois un équipement spécialisé.

La réversibilité de l'assemblage des tronçons selon l'invention est rendue possible, dans le cadre de cet aspect préférentiel de l'invention, grâce au découpage de l'ergot dans les extrémités distales mêmes des éclisses. En effet, le matériau constituant les éclisses présente une élasticité suffisante pour permettre aux ergots d'être rappelés en position de repos, lorsqu'ils sont séparés du second organe d'accouplement.

Selon une variante, ledit tronçon de chemin de câbles est constitué par un treillis de fils métalliques soudés entre eux, ledit second organe d'accouplement étant constitué par au moins une maille dudit treillis.

Préférentiellement, la largeur de ladite maille formant ledit second organe d'accouplement est très légèrement supérieure à celle de ladite éclisse constituant ledit premier organe d'accouplement, de façon à permettre un guidage à faible jeu de ladite éclisse dans ladite maille.

Egalement préférentiellement, la longueur de ladite maille formant ledit second organe d'accouplement est d'une longueur telle que la liaison entre le premier organe d'accouplement constitué par une éclisse dudit tronçon et le second organe d'accouplement constitué par une maille d'un autre tronçon est une liaison hyperstatique en position d'encastrement.

Selon une autre variante, ledit tronçon est constitué par une tôle perforée, ledit second organe d'accouplement étant constitué par au moins une perforation de ladite tôle.

Selon un autre aspect intéressant de l'invention, lesdites éclisses ne présentent aucune aspérité dépassant à l'extérieur dudit tronçon afin de pouvoir accueillir un couvercle. Les couvercles utilisés peuvent être de différente nature et présenteront avantageusement un aspect esthétique harmonieux avec l'aspect des tronçons eux-mêmes. Ils pourront par exemple être constitués de tôle pleine et venir s'encliqueter sur la partie supérieure des tronçons et auront préférentiellement la même longueur que ceux-ci.

Selon un autre aspect avantageux de l'invention, le tronçon de chemin de câbles comprend au moins une éclisse soudée par son extrémité proximale à la partie centrale dudit tronçon formant le fond de ladite gouttière.

De cette manière, outre les deux éclisses situées sur les parties latérales de la gouttière constituant le chemin de câbles formé par l'assemblage des différents tronçons, une ou plusieurs éclissent centrales viennent sécuriser l'assemblage des tronçons entre eux. Plus la largeur du tronçon sera grande, plus le nombre d'éclisses centrales sera important.

L'invention concerne également un procédé de fabrication de tels tronçons de chemin de câbles caractérisé en ce qu'il comprend les étapes consistant :
- à souder à plat lesdites éclisses sur la structure métallique destinée à constituer ladite gouttière ;
- à former ladite gouttière par pliage, par profilage ou par cambrage de ladite structure munie d'une ou de plusieurs éclisses ainsi réalisée.

Les tronçons pourront aussi être fabriqués selon un autre procédé selon l'invention consistant :
- à former ladite gouttière par pliage ou par cambrage d'un treillis de fils métalliques préalablement soudés entre eux;
- à souder lesdites éclisses sur ladite gouttière ainsi formée.

Le procédé consistant à souder à plat les éclisses est toutefois économiquement préférable à ce dernier procédé.

Préférentiellement, l'opération de soudage de ladite ou desdites éclisses est réalisée par soudure électrique par points.

L'invention ainsi que les différents avantages qu'elle présente seront plus facilement compris en référence à la description qui va suivre de deux exemples de réalisation d'un tronçon de chemin de câbles, en référence aux dessins dans lesquels
- la figure 1 représente une vue en perspective d'un premier mode de réalisation d'un tronçon de chemin de câbles selon l'invention ;
- la figure 2 représente une vue en perspective d'un dispositif de fixation annexe pouvant être utilisé pour la fixation d'un tronçon selon la figure 1 à la structure porteuse (console, mur, plafond) par l'intermédiaire de boulonnerie standard ;
- la figure 3 représente l'extrémité distale d'une des deux éclisses du tronçon de chemin de câbles de la figure 1, lorsque celle-ci est ajustée à un autre tronçon du même type ;
- la figure 4 représente une vue en perspective de la liaison par encastrement réversible entre deux tronçons selon la figure 1 ;
- la figure 5 représente un dispositif de liaison annexe pouvant être utilisé, de façon complémentaire, pour relier deux tronçons de chemins de câbles selon la figure 1;
- la figure 6 représente une vue en perspective de la liaison par encastrement réversible de deux tronçons selon la figure 4 munis d'un couvercle de protection ;
- la figure 7 représente deux tronçons de chemins de câbles réalisés selon un second mode de réalisation et sur le point d'être reliés entre eux par encastrement réversible.

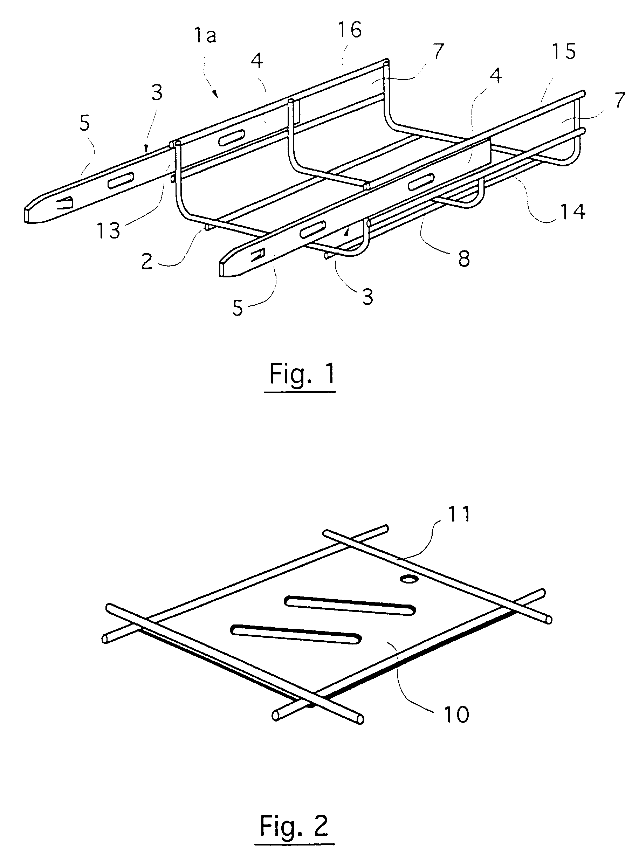

Selon la figure 1, un tronçon la destiné à former un élément constitutif d'un chemin de câbles pouvant être de nature diverse (câbles téléphoniques, câbles électriques, câbles de réseau informatique, câbles de fibres optiques et conduits souples divers...)est représenté en perspective. Ce tronçon est constitué d'un treillis 2 de fils mécano-soudés entre eux selon un motif perpendiculaire délimitant des mailles de fils. Le tronçon la se présente sous la forme d'une gouttière présentant un fond 14 et des parois latérales 15, 16. Le treillis 2 a subi un traitement d'électro-zingage, en vue d'éviter les problèmes dus à la corrosion électro-chimique du métal. On notera que d'autres types de traitement contre la corrosion peuvent être utilisés tels que la galvanisation à chaud après usinage ou l'emploi de revêtements polymérisés. Dans certains cas, l'utilisation de l'acier inoxydable est rendue obligatoire par l'agressivité de l'ambiance environnante. Par ailleurs, il est également envisageable de constituer des treillis de fils de matériaux composites (polyester armé de fibre de verre ou autres...). On notera également que le traitement anti-corrosion des fils peut avoir lieu avant le soudage de ces fils entre eux pour former le treillis. Le tronçon la de chemin de câbles présente une hauteur de 60 mm et une largeur de 150 mm. Bien évidemment, ce type de treillis peut présenter une largeur et/ou une hauteur différentes suivant l'utilisation que l'on désire faire du chemin de câbles formé par l'assemblage de tels tronçons.

Selon l'invention, le tronçon la de chemin de câbles se présente sous la forme d'un module asymétrique présentant deux extrémités complémentaires formant chacune un organe d'accouplement à position réversible. Un premier organe d'accouplement est constitué par deux éclisses 3 métalliques. Chacune de ces éclisses 3 possède une largeur très légèrement inférieure à la largeur des mailles 8 du treillis 2 qui les accueille. Chacune des éclisses 3 est positionnée dans une de ces mailles 8 de façon à ne pas dépasser à l'extérieur des parois latérales 15, 16 de la gouttière. Les extrémités proximales 4 des éclisses 3 sont chacune solidarisées aux mailles 8 par deux points de soudure 13. Ces points de soudure 13 permettent de solidariser de façon sécurisée les éclisses 3 au treillis métallique 2.

Le second organe d'accouplement est constitué par les deux mailles 7 situées à l'extrémité du tronçon opposée à celle au niveau de laquelle se trouvent les mailles 8.

Selon l'invention, le procédé de fabrication d'un tel tronçon consiste à souder à plat les éclisses 3 et les fils constituant le réseau de mailles du treillis 2, puis à former la gouttière par cambrage ou par pliage de ce treillis muni des éclisses 3.

Afin de faciliter la fixation des chemins de câbles réalisés à partir de tels tronçons à une structure porteuse, ceux-ci peuvent être munis, dans leur partie centrale d'un ou plusieurs dispositifs de fixation. Avantageusement, ces dispositifs de fixation comprennent, comme représenté à la figure 2, des plaques soudées 10 à une des mailles 11 constituant le fond de la gouttière que forme les tronçons et sont munis d'ouvertures 9. Le soudage de tels dispositifs permet de diminuer le nombre d'accessoires (tels que cavaliers, plaques, crapauds) qui doivent être utilisés pour solidariser les chemins de câbles à un support.

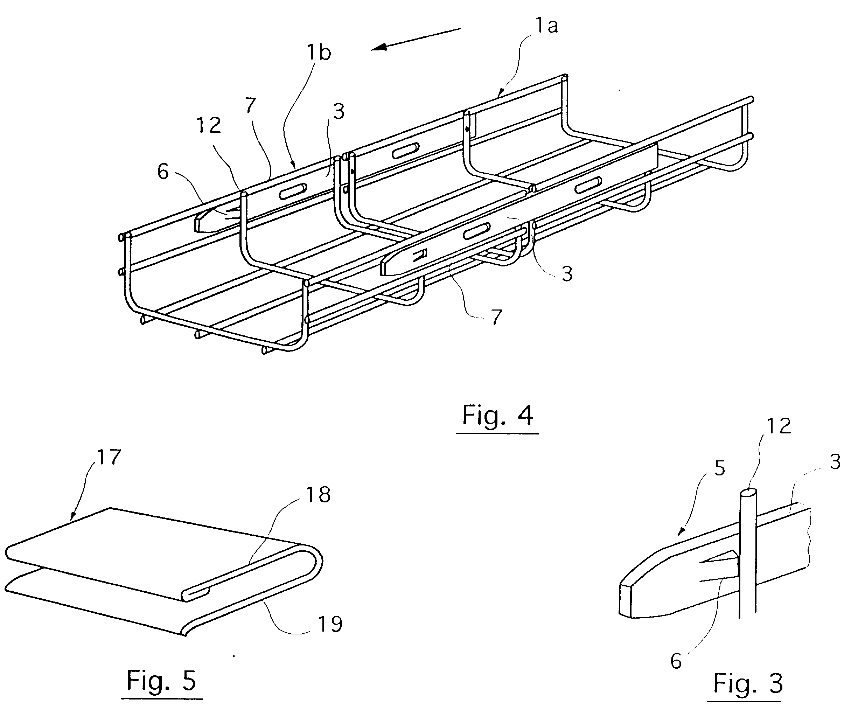

Selon la figure 3, l'extrémité distale 5 d'une éclisse 3 est représentée en perspective. Cette extrémité distale 5 est munie d'un ergot d'accouplement 6 apte à coopérer avec un fil 12 d'une maille 7 d'un autre tronçon de chemin de câbles. Ledit ergot d'accouplement 6 est formé par découpage dans ladite éclisse 3 d'un doigt venant en saillie par rapport à la surface de contact de l'éclisse 3, et susceptible de s'écarter pour éviter le fil 12 lors de l'opération d'assemblage par encastrement avec un autre tronçon de chemin de câble. Ainsi, lors de la constitution d'un chemin de câbles, les éclisses 3 d'un tronçon constituant le premier organe d'accouplement sont introduites dans les mailles 7 constituant le second organe d'accouplement d'un autre tronçon. Les ergots 6 des éclisses s'écartent alors au moment où ils passent sur les fils 12 des mailles 7 puis reprennent leur position initiale une fois qu'ils ont dépassé ces fils, de façon à s'enclencher sur ceux-ci et ainsi à former une liaison réversible entre les deux tronçons ainsi reliés. On notera, qu'à la place d'un tel ergot d'accouplement, il aurait été également possible de munir l'éclisse d'une patte d'accrochage, accueillant le second organe d'accouplement, lors du raccordement de deux tronçons.

La déformation de l'éclisse 3 est telle qu'elle permet la réversibilité du positionnement de l'ergot 6 sur le fil 12. Cet ergot 6 est dirigé vers l'intérieur de la gouttière formée par le treillis 2. L'autre éclisse 3 présente une structure similaire à celle représentée à la figure 3 sauf en ce que l'ergot 6 est formé de façon à être dirigé également vers l'intérieur de la gouttière du treillis 2.

Selon la figure 4, la liaison par encastrement de deux tronçons 1a, 1b de chemin de câbles selon l'invention est réalisée en introduisant les organes d'accouplement constitués par des éclisses 3 d'un premier tronçon 1a dans les organes d'accouplement constitués par les mailles 7 d'un second tronçon 1b, dans le sens visualisé par la flèche. Pour les commodités de la description, les tronçons 1a et 1b sont représentés partiellement, le tronçon 1b n'étant pas pourvu de son premier organe d'accouplement et le tronçon 1a n'étant pas pourvu de son second organe d'accouplement.

Cette introduction permet de positionner les ergots 6 des éclisses 3 sur les fils 12 des mailles 7. Ces éclisses se trouvent ainsi bloquées dans ces mailles 7 dont la longueur et la largeur sont conçues pour coopérer avec les éclisses 3 de façon à former une liaison hyperstatique entre les tronçons 1a et 1b.

On notera que pour des tronçons présentant une largeur plus importante que celle représentée aux figures 1 et 3, on pourra également munir ces tronçons d'une troisième éclisse positionnée dans la partie centrale de la zone formant le fond de la gouttière. On pourra également utiliser des dispositifs annexes permettant de relier les tronçons par leurs parties centrales, tels que celui représenté à la figure 5. Selon la figure 5, un dispositif de liaison annexe entre deux tronçons de chemin de câbles selon l'invention, se présente sous la forme d'un clip 17 qui peut être installé de façon à relier les fils métalliques de deux mailles appartenant à la partie centrale de deux tronçons successifs. A cet effet, le clip 17 présentent deux branches élastiques 18,19.Préférentiellement, ce clip 17 sera soudé sur le treillis à l'extrémité comportant les éclisses 3.

Selon la figure 4, le raccordement par encastrement d'un tronçon 1a à un autre tronçon 1b est effectué selon une opération simple et rapide ne nécessitant aucun outil classique ou spécifique. Le montage est effectué sans utilisation aucune de boulons ou d'autres accessoires et présente une excellente résistance mécanique. Cet assemblage peut être effectué dans des conditions d'encombrement minimales, par exemple lorsque le chemin de câbles doit être formé le long d'un mur. Le chemin de câbles réalisé par l'assemblage de différents tronçons présente un aspect esthétique harmonieux, puisque les éclisses de raccordement s'intègrent parfaitement à l'ensemble.

Par ailleurs, la conception des éclisses 3 permet de désolidariser facilement les différents tronçons constituant un chemin de câbles en effectuant une traction inverse au sens représenté par la flèche.

De plus les éclisses ne présentant aucune aspérité extérieure ou intérieure, les risques d'arrachement de câbles ou de détérioration des matériaux se trouvant à proximité des chemins de câbles est très réduit. L'adaptation d'un couvercle sur le chemin de câbles en est ainsi facilitée.

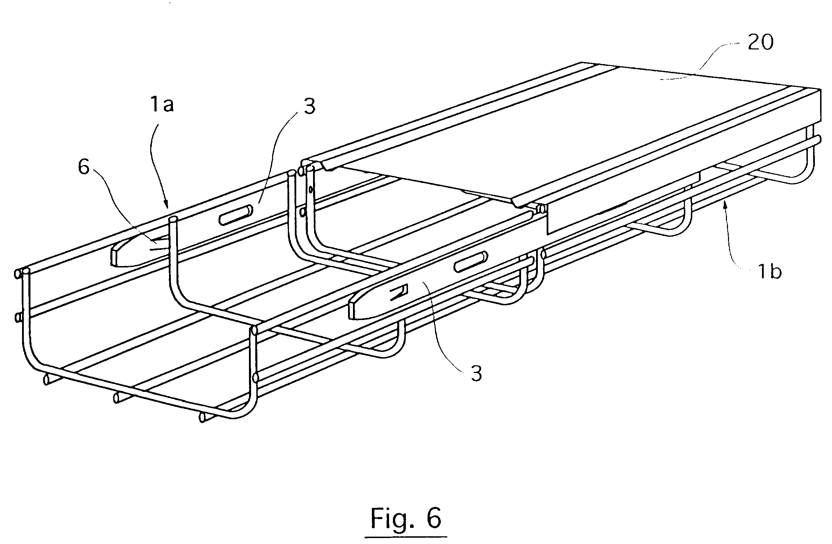

Selon la figure 6, un chemin de câbles réalisé conformément à la figure 4 est représenté partiellement. Ce chemin de câble inclut les deux tronçons 1a et 1b représentés en partie et reliés entre eux grâce aux éclisses 3 du tronçon 1a. Ce chemin de câbles ne présente aucune aspérité extérieure, puisque les ergots 6 des éclisses 3 sont dirigés vers l'intérieur de la gouttière que forme le chemin de câbles. Il peut donc aisément accueillir un couvercle 20 constitué par une plaque métallique dont le profil lui permet de venir s'encastrer sur les tronçons 1a et 1b. Pour les besoins de la description, ce couvercle 20 est représenté en partie.

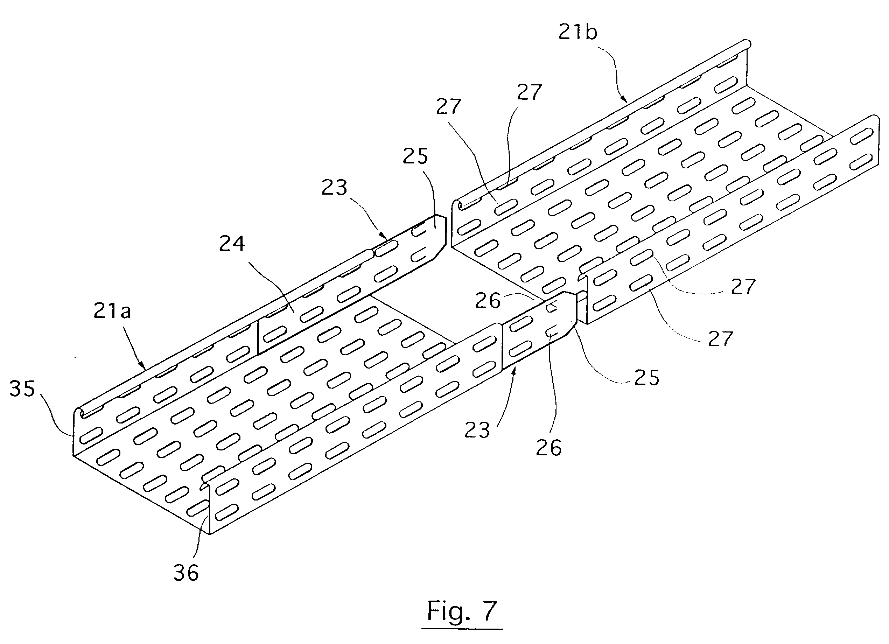

Selon la figure 7, deux tronçons 21a, 21b sont représentés en perspective sur le point d'être reliés par encastrement réversible. Ces tronçons de chemin de câbles sont constitués de tôles perforées. Pour les commodités de la description, les tronçons 21a et 21b sont représentés partiellement, le tronçon 21b n'étant pas pourvu de son premier organe d'accouplement. Le premier organe d'accouplement du tronçon 21a est constitué par deux éclisses 23 formées dans une tôle perforée, et dont les extrémités proximales 24 sont soudées aux parois latérales 35, 36 de la partie formant gouttière du tronçon 21a. Les extrémités distales 25 de ces éclisses 23 sont, quant à elles, munies d'ergots d'accouplement 26 formés par emboutissage dans la tôle perforée formant les éclisses 23. Lesdits ergots d'accouplement 6 viennent, en position de repos, en saillie par rapport à la surface de contact des éclisses 23. Leur pente autorise le léger déplacement latéral des éclisses lors de l'opération d'assemblage avec le tronçon de chemin de câbles 21B. Le jeu latéral de l'éclisse à l'intérieur du bord roulé est rendu possible grâce à la différence entre l'épaisseur de l'éclisse et la largeur intérieure du bord roulé. Ainsi, lors de la constitution d'un chemin de câbles, les éclisses 23 d'un tronçon de câbles constituant le premier organe d'accouplement sont encastrées dans les perforations 27 d'un autre tronçon constituant le second organe d'accouplement.

La déformation possible des éclisses 23 est telle qu'elle permet la réversibilité du positionnement des ergots 26 dans les perforations 27.

L'homme de métier pourra aisément imaginer d'utiliser un nombre d'éclisses supérieur à deux ou à trois, de munir l'extrémité distale des éclisses de déformations présentant un aspect différent ou encore d'adapter l'invention à des treillis possédant des mailles, ou à des plaques présentant des perforations, de formes différentes.

## Revendications

1. Tronçon (1a, 21a) de chemin de câbles se présentant sous la forme d'une gouttière caractérisé en ce qu'il est constitué par un module asymétrique présentant deux extrémités complémentaires formant chacune un organe d'accouplement par encastrement réversible, un premier organe d'accouplement étant constitué par au moins une éclisse (3, 23) dont l'extrémité proximale (4, 24) est soudée à ladite gouttière et dont l'extrémité distale (5, 25) est munie d'un ergot d'accouplement (6, 26), le second organe d'accouplement étant formé dans au moins une partie de ladite gouttière et étant susceptible d'accueillir ledit ergot d'accouplement (6, 26).

2. Tronçon (1a, 21a) de chemin de câbles selon la revendication 1 caractérisé en ce qu'il comprend au moins deux éclisses (3, 23) dont les extrémités proximales (4, 24) sont soudées aux parois latérales (15, 16, 35, 36) de ladite gouttière, symétriquement par rapport à l'axe longitudinal de celle-ci, de façon à se faire face.

3. Tronçon (1a, 21a) de chemin de câbles selon la revendication 1 caractérisé en ce qu'il comprend au moins deux éclisses (3, 23), l'une desdites éclisses (3, 23) étant soudée à l'extrémité d'une des parois latérales (15, 35) de ladite gouttière et l'autre éclisse (3, 23) étant soudée à l'extrémité opposée de l'autre paroi latérale (16, 36) de ladite gouttière.

4. Tronçon (1a, 21a) de chemin de câble selon l'une des revendications 1 à 3 caractérisé en ce que ledit ergot d'accouplement (6, 26) est constitué par un doigt venant en saillie par rapport à la surface de ladite éclisse (3, 23) et formé par découpage ou par emboutissage dans celle-ci, le matériau constituant ladite éclisse présentant une élasticité suffisante pour permettre à l'ergot (6, 26) de venir s'encliqueter sur le second organe d'accouplement, lors de l'opération d'assemblage avec un autre tronçon de chemin de câbles.

5. Tronçon (1a) de chemin de câbles selon l'une des revendications 1 à 4 caractérisé en ce qu'il est constitué par un treillis (2) de fils métalliques soudés entre eux, ledit second organe d'accouplement étant constitué par au moins une maille (7) dudit treillis (2).

6. Tronçon (1a) de chemin de câbles selon la revendication 5 caractérisé en ce que la largeur de ladite maille (7) formant ledit second organe d'accouplement est très légèrement supérieure à celle de ladite éclisse (3) constituant ledit premier organe d'accouplement de façon à permettre un guidage à faible jeu de ladite éclisse (3) dans ladite maille (7).

7. Tronçon (1a) de chemin de câbles selon la revendication 6 caractérisé en ce que la longueur de ladite maille (7) formant ledit second organe d'accouplement est d'une longueur telle que la liaison entre le premier organe d'accouplement constitué par une éclisse (3) dudit tronçon (1a) et le second organe d'accouplement constitué par une maille (7) d'un autre tronçon (1b) selon la revendication 6 est une liaison hyperstatique en position d'encastrement.

8. Tronçon (21a) de chemin de câbles selon l'une des revendications 1 à 4 caractérisé en ce qu'il est constitué par une tôle perforée, ledit second organe d'accouplement étant constitué par au moins une perforation (27) de ladite tôle.

9. Tronçon (1a, 21a) de chemin de câbles selon l'une des revendications 1 à 8 caractérisé en ce que lesdites éclisses (3, 23) ne présentent aucune aspérité dépassant à l'extérieur dudit tronçon (1a, 21a) afin de pouvoir accueillir un couvercle (20).

10. Tronçon (1a, 21a) de chemin de câbles selon l'une des revendications 1 à 9 caractérisé en ce qu'il comprend au moins une éclisse (3, 23) soudée par son extrémité proximale (4, 24) à la partie centrale dudit tronçon (1a, 21a) formant le fond de ladite gouttière.

11. Procédé de fabrication d'un tronçon (1a, 21a) de chemin de câbles selon l'une des revendications 1 à 10 caractérisé en ce qu'il comprend les étapes consistant :
- à souder à plat lesdites éclisses (3, 23) sur la structure métallique destiné à constituer ladite gouttière ;
- à former ladite gouttière par pliage ou par cambrage de ladite structure munie d'une ou plusieurs éclisses (3, 23) ainsi réalisée.

12. Procédé de fabrication d'un tronçon (1a) de chemin de câbles selon l'une des revendications 5 à 7 ou 9 ou 10 caractérisé en ce qu'il comprend les étapes consistant :
- à former ladite gouttière par pliage ou par cambrage d'un treillis de fils métalliques préalablement soudés entre eux;
- à souder lesdites éclisses (3, 23) sur ladite gouttière ainsi formée.

13. Procédé de fabrication d'un tronçon (1) de chemin de câbles selon la revendication 12 caractérisé en ce que l'opération de soudage de ladite ou desdites éclisses (3) est réalisée par soudure électrique par points (13).

## Patentansprüche

1. Kabelrinnenteilstück (1a, 21a), dadurch gekennzeichnet, daß es aus einem unsymmetrischen Modul besteht, welches zwei komplementäre Enden aufweist, die jeweils ein Anschlußstück durch lösbare Verrastung bilden, wobei das erste Anschlußstück aus mindestens einer Anschlußlasche (3, 23) besteht, dessen sich in der Nähe der Rinnenmitte befindliches Ende (4, 24) an die Rinne geschweißt ist und deren entfernteres Ende (5, 25) einen Einrasthaken (6, 26) aufweist und das zweite Anschlußstück mindestens in einem Teil der Rinne ausgebildet ist und den Einrasthaken (6, 26) aufnehmen kann.

2. Kabelrinnenteilstück (1a, 21a) gemäß Anspruch 1, dadurch gekennzeichnet, daß es mindestens zwei Anschlußlaschen (3, 23) umfaßt, deren sich in der Nähe der Rinnenmitte befindliche Enden (4, 24) an die Rinnenseiten (15, 16, 35, 36) derart symmetrisch zur Längsachse der Rinne geschweißt sind, daß sie einander gegenüberliegen.

3. Kabelrinnenteilstück (1a, 21a) gemäß Anspruch 1, dadurch gekennzeichnet, daß es mindestens zwei Anschlußlaschen (3, 23) umfaßt, wobei eine der Laschen (3, 23) an das Ende einer der Rinnenseiten (15, 35) und die andere Lasche (3, 23) an das entgegenliegende Ende der anderen Rinnenseite (16, 36) geschweißt ist.

4. Kabelrinnenteilstück (1a, 21a) gemäß einem der Ansprüche 1 bis 3, dadurch gekennzeichnet, daß der Einrasthaken (6, 26) aus einem Finger besteht, der aus der Fläche der Lasche (3, 23) herausragt und durch Ausschneiden oder Ausstanzen aus dieser Fläche gebildet wird, wobei das Laschenmaterial elastisch genug ist, um dem Einrasthaken (6, 26) das Einrasten in dem zweiten Anschlußstück zu ermöglichen, wenn das Rinnenstück an ein zweites Rinnenstück gefügt wird.

5. Kabelrinnenteilstück (1a, 21a) gemäß einem der Ansprüche 1 bis 4, dadurch gekennzeichnet, daß es aus einem Gitter (2) untereinander zusammengeschweißter Drähte besteht, wobei das zweite Anschlußstück aus mindestens einer Masche (7) dieses Gitters (2) besteht.

6. Kabelrinnenteilstück (1a) gemäß Anspruch 5, dadurch gekennzeichnet, daß die Masche (7), die das zweite Anschlußstück bildet, nur ein wenig breiter als die Lasche (3) ist, die das erste Anschlußstück bildet, um eine Führung der Lasche (3) mit geringem Spiel in der Masche (7) sicherzustellen.

7. Kabelrinnenteilstück (1a) gemäß Anspruch 6, dadurch gekennzeichnet. daß die Masche (7), die das zweite Anschlußstück bildet, so lang ist, das es sich bei der Verbindung zwischen dem ersten Anschlußstück, das aus einer Lasche (3) des Rinnenteilstücks (1a) besteht und dem zweiten Anschlußstück, das aus einer Masche (7) eines anderen Teilstücks (1b) gemäß Anspruch 6 besteht, in der Einrastposition um eine hyperstatische Verbindung handelt.

8. Kabelrinnenteilstück (21a) gemäß einem der Ansprüche 1 bis 4, dadurch gekennzeichnet, daß es aus einem gelochten Blech besteht, wobei das zweite Anschlußstück aus mindestens einem Loch (27) im Blech besteht.

9. Kabelrinnenteilstück (1a, 21a) gemäß einem der Ansprüche 1 bis 8, dadurch gekennzeichnet, daß die Laschen (3. 23) keine Rauheiten aufweisen. die in das Innere des Rinnenteilstücks (1a, 21a) hineinragen, um einen Deckel (20) aufnehmen zu können.

10. Kabelrinnenteilstück (1a, 21a) gemäß einem der Ansprüche 1 bis 9, dadurch gekennzeichnet, daß es mindestens eine Lasche (3, 23) aufweist, dessen sich in der Nähe der Rinnenmitte befindliches Ende (4, 24) an die Mitte des Rinnenteilstücks (1a, 21a) geschweißt ist, das den Boden der Rinne bildet.

11. Herstellungsverfahren eines Kabelrinnenteilstücks (1a, 21a) gemäß einem der Ansprüche 1 bis 10, dadurch gekennzeichnet, daß es die folgenden Schritte umfaßt:
- Anschweißen der Laschen (3, 23) flach auf die Metallstruktur, aus der das Rinnenteilstück gebildet werden soll;
- Bilden des Rinnenteilstücks durch Biegen und Falzen der so gebildeten Struktur, die eine oder mehrere Laschen (3, 23) aufweist.

12. Herstellungsverfahren eines Kabelrinnenteilstücks (1a) gemäß einem der Ansprüche 5 bis 7, dadurch gekennzeichnet, daß es die folgenden Schritte umfaßt:
- Bilden des Rinnenteilstücks durch Biegen oder Falzen eines Gitters aus untereinander verschweißten Drähten;
- Schweißen der Laschen (3, 23) an das so gebildete Rinnenteilstück.

13. Herstellungsverfahren eines Kabelrinnenteilstücks (1) gemäß Anspruch 12, dadurch gekennzeichnet, daß das Schweißen der Lasche(n) (3) durch elektrisches Punktschweißen erfolgt.

## Claims

1. Cable duct section (1a, 21a) in the form of a channel, characterized in that it consists of an asymmetrical module having two complementary ends, each forming a coupling element by reversible fixing, a first coupling element consisting of at least one bar (3, 13) whose proximal end (4, 24) is welded to the said channel and whose distal end (5, 25) is equipped with a coupling lug (6, 26), the second coupling element being formed in at least one part of the said channel and being capable of accommodating the said coupling lug (6, 26).

2. Cable duct section (1a, 21a) according to Claim 1, characterized in that it comprises at least two bars (3, 23) whose proximal ends (4, 24) are welded to the side walls (15, 16, 35, 36) of the said channel, symmetrically relative to the longitudinal axis of the latter, so that they are opposite each other.

3. Cable duct section (1a, 21a) according to Claim 1, characterized in that it comprises at least two bars (3, 23), one of the said bars (3, 23) being welded to the end of one of the side walls (15, 35) of the said channel and the other bar (3, 23) being welded to the opposite end of the other side wall (16, 36) of the said channel.

4. Cable duct section (1a, 21a) according to any one of Claims 1 to 3, characterized in that the said coupling lug (6, 26) consists of a stud which projects from the surface of the said bar (3, 23) and is formed by cutting or by pressing into the latter, the material from which the said bar is made being sufficiently resilient to enable the lug (6; 26) to snap on to the second coupling element when it is joined with another cable duct section.

5. Cable duct section (1a) according to any one of Claims 1 to 4, characterized in that it consists of a lattice (2) of metal wires welded together, the said second coupling element consisting of at least one mesh (7) of the said lattice (2).

6. Cable duct section (1a) according to Claim 5, characterized in that the width of the said mesh (7) forming the said second coupling element is very slightly greater than that of the said bar (3) which constitutes the said first coupling element, enabling the said bar (3) to be guided within the said mesh (7) with little play.

7. Cable duct section (1a) according to Claim 6, characterized in that the length of the said mesh (7) forming the said second coupling element is such that, in the fitted position, the coupling between the first coupling element, consisting of a bar (3) of the said section (1a), and the second coupling element, consisting of a mesh (7) of another section (1b), according to Claim 6, is a hyperstatic coupling.

8. Cable duct section (21a) according to any one of Claims 1 to 4, characterized in that it consists of a perforated plate, the second coupling element consisting of at least one perforation (27) of the said plate.

9. Cable duct section (1a, 21a) according to any one of Claims 1 to 8, characterized in that, in order to be capable of accommodating a cover (20), the said bars (3, 23) do not have any protuberances extending outside the said section (1a, 21a).

10. Cable duct section (1a, 21a) according to any one of Claims 1 to 9, characterized in that it comprises at least one bar (3, 23) which is welded at its proximal end (4, 24) to the central part of the said section (1a, 21a) forming the base of the said channel.

11. Method of manufacturing a cable duct section (1a, 21a) according to any one of Claims 1 to 10, characterized in that it comprises the stages consisting in:
- flat welding the said bars (3, 23) on to the metal structure which is intended to constitute the said channel;
- forming the said channel by bending or by curving the said structure fitted thus with one or several bars (3, 23).

12. Method of manufacturing a cable duct section (1a) according to any one of Claims 5 to 7 or 9 or 10, characterized in that it comprises the stages consisting in:
- forming the said channel by bending or by curving a lattice of metal wires previously welded together;
- welding the said bars (3, 23) on to the said channel formed thus.

13. Method of manufacturing a cable duct section (1) according to Claim 12, characterized in that the process of welding the said bar or bars (3) is effected by electric spot-welding (13).
